# EUROPÄISCHE PATENTANMELDUNG

(11) **EP 1 170 672 A1**
(43) Veröffentlichungstag der Anmeldung: **09.01.2002**
(21) Anmeldenummer: 00114337.9
(22) Anmeldetag: 04.07.2000
(51) Int. Cl.: G06F 17/24

(54) **Automatische Erstellung von Publishing-Dokumenten über das Internet**

(71) Anmelder: OKS GmbH, 71394 Kerner (DE)
(72) Erfinder: Kretzschmar, Oliver, Dr. c/o OKS GmbH, 71394 Kernen (DE)
(74) Vertreter: Betten & Resch

(57) **Zusammenfassung**

Ein Verfahren zur automatischen Erstellung eines Publishing-Dokuments (200) über das Internet enthält die Verfahrenschritte: Erstellen einer Publishing-Vorlage (100) aufweisend eine Dokumentenvorlage mit festgelegtem Inhalt und ein oder mehrere Rahmenelemente (120-127), die mit Inhalten definierten Typs belegbar sind; Bereitstellung eines Zugangs über das Internet für berechtigte Benutzer zur Bearbeitung der Publishing-Vorlage und zum Zugriff auf den Inhalt einer Medien-Datenbank (20); Belegung der Rahmenelemente mit Inhalten des definierten Typs entsprechend einer Benutzerauswahl aus Inhalten der Medien-Datenbank (20) und/oder externen Inhalten; und Ausgabe des fertiggestellten Publishing-Dokuments über ein Ausgabemedium. Dadurch wird es möglich, auf der Basis einer Publishing-Vorlage über das Internet einfach und preiswert eine Vielzahl von Publishing-Dokumenten, etwa Werbebroschüren mit vom Benutzer den lokalen Bedürfnissen entsprechend angepaßtem Inhalt zu erstellen, wobei die Einhaltung von inhaltlichen und formalen Qualitätskriterien erfüllt wird.

## Beschreibung

### GEBIET DER ERFINDUNG

Die vorliegende Erfindung betrifft ein Verfahren, ein Computersystern sowie ein Computerprogramm zur automatischen Erstellung von Publishing-Dokumenten über das Internet. Bei den Publishing-Dokumenten kann es sich um Print-Medien wie Zeitungsbeilagen, Werbebroschüren usw. als auch um elektronische Medien wie Web-Seiten oder bewegte Bildsequenzen handeln.

### BESCHREIBUNG DES STANDES DER TECHNIK

In einer durch zunehmende Individualität geprägten Gesellschaft besteht ein wachsender Bedarf an personalisierten bzw. zielgruppenorientierten Werbemitteln. Bei der Bewerbung großer Anbieter oder Marken ist es einerseits wichtig, daß auch lokale Händler die Möglichkeit haben, schnell auf die Bedürfnisse ihrer lokalen Kundschaft und der Konkurrenz reagieren zu können, andererseits muß ein einheitliches Corporate Design und ein hohes Qualitätsniveau sichergestellt werden. Dieser Trend zu personalisierten bzw. zielgruppenorientierten Werbemitteln, wie z.B. Prospekten, Anzeigen-Flyern usw. und weg vom einheitlichen Massen-Werbemittel für ganze Ländermärkte ist mit einem großen Kosten- und Zeitaufwand für. die werbetreibenden Kunden verbunden. Es müssen mehrere inhaltlich verschiedene aber gestalterisch einheitlich gehaltene Werbemittel mit geringer Auflage für verschiedene lokale Zielgruppen produziert werden.

Bisher werden derartige Werbemittel, insbesondere Print-Werbemittel manuell mit einem entsprechenden Layoutprogrammen wie etwa Quark Xpress mit hohem Kosten- und Zeitaufwand erstellt. Bei einer regionalen Fertigung dieser Werbemittel besteht außerdem das Problem der Kontrolle gleichmäßiger Qualitätsstandards durch die Muttergesellschaft der regional tätigen Töchter oder Vertriebsunternehmen. Weiterhin ist nachteilig, daß viel Doppelarbeit geleistet werden muß, da jedes lokale Werbemittel separat gelayoutet wird und separat auf die dafür notwendigen Medien wie Texte, Bilder usw. zugreifen muß.

Es ist daher eine Aufgabe der vorliegenden Erfindung, die Nachteile im Stand der Technik zu vermeiden und ein Verfahren, eine Vorrichtung und ein Computerprogramm zur Erstellung von Publishing-Dokumenten vorzuschlagen, wobei die Arbeitsschritte automatisiert, zeitsparend und kostengünstig ausgeführt werden können.

Eine weitere Aufgabe der vorliegenden Erfindung liegt darin, ein Verfahren zur Erstellung von Publishing-Dokumenten vorzuschlagen, bei dem regional differierende Inhalte in ein einheitliches Format integriert werden können.

### ZUSAMMENFASSUNG DER ERFINDUNG

Die vorliegende Erfindung schlägt ein Verfahren zur automatischen Erstellung eines Publishing-Dokuments über das Internet vor, welches die Schritte aufweist: Erstellen einer Publishing-Vorlage aufweisend eine Dokumentenvorlage mit festgelegtem Inhalt und ein oder mehrere Rahmenelemente, die mit Inhalten definierten Typs belegbar sind; Bereitstellung eines Zugangs über das Internet für berechtigte Benutzer zur Bearbeitung der Publishing-Vorlage und zum Zugriff auf den Inhalt einer Medien-Datenbank; und Belegung der Rahmenelemente mit Inhalten des definierten Typs entsprechend einer Benutzerauswahl aus Inhalten der Medien-Datenbank und/oder externen Inhalten.

Das erfindungsgemäße Verfahren hat den Vorteil, daß Werbemittel von einem lokalen Werbetreibenden, beispielsweise einem Großhändler, automatisiert über das Internet erstellt werden können, wobei durch entsprechende Voreinstellungen sichergestellt werden kann, daß eine einheitliche äußere Form (Firmenlogo, Aufmachung, Farben u.dgl.) und ein Mindestqualitätsstandard eingehalten werden. Die Erstellung des Publishing-Dokuments, etwa eines Werbemittels, kann so schnell und preisgünstig entsprechend den Bedürfnissen des lokalen Bestellers erfolgen. Außerdem ermöglicht der Zugriff auf den Inhalt einer zentralen Medien-Datenbank eine Vielfalt an Gestaltungsmöglichkeiten auch für einen lokalen Besteller von Publishing-Dokumenten.

Dabei kann ein Rahmenelement den Datentyp, die Formatierung und/oder die Zugehörigkeit zu einer bestimmten Inhaltskategorie oder einem Parameterwertebereich des Inhalts bestimmen. Der Benutzer ist so durch die Vorgaben der Rahmenelemente in der Publishing-Vorlage auf bestimmte Inhalte und insbesondere deren Formatierung eingeschränkt. Beispielsweise können für ein bestimmtes Anzeigenblatt nur Produkte aus einer bestimmten Produktkategorie beworben werden, indem der Benutzer zur Belegung eines bestimmten Rahmenelements nur Zugang zu der dafür zugewiesenen inhaltlichen Kategorie in der Medien-Datenbank, die beispielsweise Bilder der zu bewerbenden Produkte enthält, hat. Außerdem kann ein Rahmenelement den Schrifttyp, die Schriftgröße, die Farbe usw. eines Textes vorschreiben. Es ist auch möglich, daß bei der Preisauswahl ein bestimmter Preisbereich vorgegeben ist, der weder über- noch unterschritten werden kann, etwa aus übergeordneten Wettbewerbsgesichtspunkten.

Das nach dem erfindungsgemäßen Verfahren erstellte Publishing-Dokument liegt in einem Speicher in elektronischer Form vor, etwa als PDF- oder XML-Datei. Dabei kann erfindungsgemäß vorgesehen sein, daß Inhalte, die aus der Medien-Datenbank in das Publishing-Dokument eingefügt werden, automatisch in das für das Publishing-Dokument erforderliche Format konvertiert werden.

Das Publishing-Dokument kann an eine Vielzahl von Ausgabemedien in jeweils entsprechendem Format ausgegeben werden. Beispielsweise kann das fertiggestellte oder auch ein teilweise fertiggestelltes Publishing-Dokument als JPEG-Datei auf dem Bildschirm eines Benutzers zur Kontrolle angezeigt werden. Soll das Werbemedium ein Print-Medium wie etwa eine Werbebroschüre sein, so kann das Publishing-Dokument über das Internet oder ein anderes geeignetes Datenübertragungsmedium direkt einer Druckeinrichtung zugeführt werden, die die gewünschte Anzahl von Werbemedien entsprechend dem Publishing-Dokument druckt. Mit dem erfindungsgemäßen Verfahren ist es natürlich ebenso möglich, elektronische Werbemittel wie Internet-Werbebanner, Werbefilme o.dgl. zu erstellen.

Bei der Medien-Datenbank handelt es sich vorzugsweise um eine SQL- bzw. ODBC-fähige Datenbank.

Die Publishing-Vorlage enthält vorzugsweise Informationen zur Identifizierung eines berechtigten Benutzers. Dadurch wird sichergestellt, daß nur berechtigte Benutzer, etwa die Vertragshändler und nicht die Konkurrenz Zugang zu der Publishing-Vorlage hat. Vorzugsweise enthält die Publishing-Vorlage alle notwendigen Informationen zur Erstellung eines komplettierten Publishing-Dokuments einschließlich Abwicklung der Bestellung von Werbemitteln. Hierzu gehören Informationen wie z.B. die Bezeichnung einer Bestellung, Dateiname und Pfad der Publishing-Vorlage(n), Definition von Freiflächen und Rahmenelementen usw.

Die Publishing-Vorlage kann obligatorische Rahmenelemente, die zur Erstellung eines gültigen Publishing-Dokuments mit Inhalt belegt werden müssen oder fakultative Rahmenelemente enthalten, deren Belegung mit Inhalt dem Benutzer oder Besteller freigestellt ist. Die Rahmenelemente können dabei positionsfest oder positionsvariabel sein.

Vorzugsweise enthält das erfindungsgemäße Verfahren eine Funktion, die in Abhängigkeit von Ausgabemedium und gewünschter Stückzahl die Gesamtkosten einer Bestellung von Werbemitteln ermittelt und diese dem Benutzer auf Anfrage zugänglich macht.

Die vorliegende Erfindung betrifft außerdem eine auf einern Speichermedium gespeicherte Publishing-Vorlage sowie eine in einem Datensignal codierte Publishing-Vorlage, welche eine Dokumentenvorlage mit festgelegtem Inhalt, eines oder mehrere Rahmenelemente, die mit Inhalten definierten Typs belegbar sind, Daten, die die Verifizierung der Zugangsberechtigung eines Benutzers ermöglichen, und Daten, die die Auswahl von Inhalten aus einer Medien-Datenbank zur Belegung des Rahmenelements bestimmen, aufweist.

Die Erfindung betrifft weiterhin ein Computersystem zur automatischen Erstellung eines Publishing-Dokuments über das Internet, wobei das Computersystem aufweist: eine Einrichtung zur Erstellung einer Publishing-Vorlage, die eine Dokumentenvorlage mit festgelegtem Inhalt und ein oder mehrere Rahmenelemente, die mit Inhalten definierten Typs belegbar sind, aufweist; eine Medien-Datenbank zur Speicherung von Medien-Inhalten; eine Einrichtung zur Verifizierung der Zugangsberechtigung eines Benutzers; eine Internet-Schnittstelle, die einem berechtigten Benutzer Zugang zur Bearbeitung der Publishing-Vorlage und Zugriff auf die Medien-Datenbank ermöglicht; und eine Einrichtung zur Belegung der Rahmenelemente mit Inhalten des definierten Typs entsprechend einer Benutzerauswahl; eine Ausgabeeinrichtung zur Ausgabe des fertiggestellten Publishing-Dokuments.

Die Erfindung betrifft weiterhin ein Computerprogramm gemäß beiliegendem Anspruch 18.

Weitere vorteilhafte Ausgestaltungen der Erfindung ergeben sich aus den abhängigen Ansprüchen.

### KURZE BESCHREIBUNG DER ZEICHNUNGEN

Weitere Aufgaben, Merkmale und Vorteile der vorliegenden Erfindung werden aus der folgenden Beschreibung unter Bezugnahme auf die beiliegenden Zeichnungen deutlich, in denen:
- Figur 1: ein Flußdiagramm zur Erläuterung der Verfahrensschritte zur Erstellung einer Publishing-Vorlage gemäß einem Ausführungsbeispiel der vorliegenden Erfindung zeigt;
- Figur 2: ein Flußdiagramm zur Erläuterung der Verfahrensschritte zur Erstellung eines Publishing-Dokuments über das Internet gemäß einem Ausführungsbeispiel der vorliegenden Erfindung zeigt;
- Figur 3A: eine schematische Darstellung einer Publishing-Vorlage gemäß einem Ausführungsbeispiel der vorliegenden Erfindung zeigt;
- Figur 3B: eine schematische Darstellung eines fertiggestellten Publishing-Dokuments gemäß einem Ausführungsbeispiel der vorliegenden Erfindung zeigt; und
- Figur 4: eine schematische Darstellung einer bevorzugten erfindungsgemäßen Hardware-Konfiguration ist.

### DETAILLIERTE BESCHREIBUNG EINES AUSFÜHRUNGSBEISPIELS

Die Erfindung wird im folgenden unter Bezugnahme auf die Zeichnungen im Detail erläutert.

Zunächst werden kurz einige für das Verständnis der Erfindung wesentliche Begriffe erläutert:

Eine **Publishing-Vorlage** bezeichnet ein in elektronischer Form auf einem Speichermedium gehaltenes Dokument, auf das ein Benutzer oder Besteller zugreifen kann, um das Publishing-Dokument (siehe unten) zu erstellen. Die Publishing-Vorlage enthält vorzugsweise alle notwendigen Informationen zur Fertigung eines Publishing-Dokuments und der Abwicklung einer darauf basierenden Bestellung. Dazu gehören Informationen wie z.B. eine Projektbezeichnung, Angaben über berechtigte Nutzer, Dateiname und Pfad von Dokumenten-Vorlagen (siehe unten), Definition von Freiflächen und Rahmenelementen.

Eine Publishing-Vorlage weist eine **Dokumenten-Vorlage** auf, welche beispielsweise ein PDF- oder XML-Dokument ist, das einen vom Kunden gewünschten Aufbau, Layout und Darstellung besitzt und als Vorlage für das zu erstellende Publishing-Dokument dient. Die Dokumenten-Vorlage kann insbesondere das Corporate Design des Auftraggebers mit Farben, Logos, Schrifttypen usw. einschließlich Texten und Bildern beinhalten.

In die Dokumenten-Vorlage können durch den Vorlagendesigner **Rahmenelemente** (Freiflächen) für Texte und Bilder eingegeben werden. Die Rahmenelemente bestimmen die Art und gegebenenfalls Formatierung wie Farbe, Schriftgröße usw. des in das Rahmenelement einfügbaren Inhalts.

Ein fertiggestelltes **Publishing-Dokument** bezeichnet das durch die Erfindung auf der Basis der Publishing-Vorlage unter Berücksichtigung der Nutzerauswahl automatisch gefertigte, kontrollierte und gültige Dokument/Dokumente. Dieses liegt vorzugsweise in elektronischer Form, etwa als PDF- oder XML-Dokument vor und dient als Basis für das Werbemittel, wie etwa eine Anzeigenbeilage oder ein Werbe-Flyer. Ein Publishing-Dokument kann in verschiedenen Formen verwendet werden, beispielsweise als Print-Medium oder als elektronisches Medium. Die Erfindung ist nicht beschränkt auf die Herstellung von Werbemitteln, sondern kann auch andere Arten von Dokumenten umfassen.

Ein fertiggestelltes Publishing-Dokument wird als **Shop-Produkt** an den Besteller geliefert. Ein Shop-Produkt beinhaltet neben dem Publishing-Dokument in einem bestimmten Format Preisangaben für bestimmte Mengen, Post-Kommandos (Druckbefehle) zur Herstellung der Werbemittel.

Weitere Begriffsdefinitionen werden im laufenden Text gegeben.

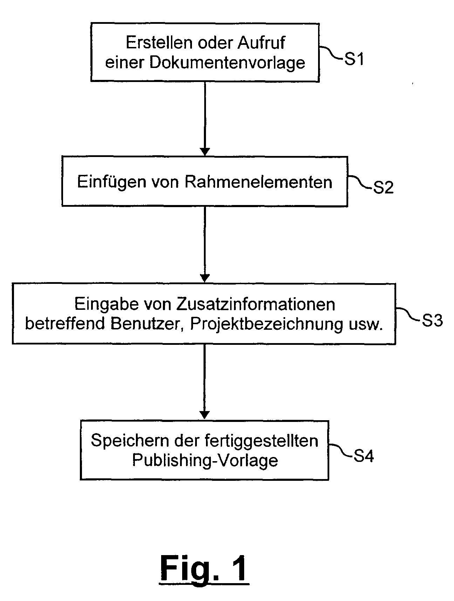

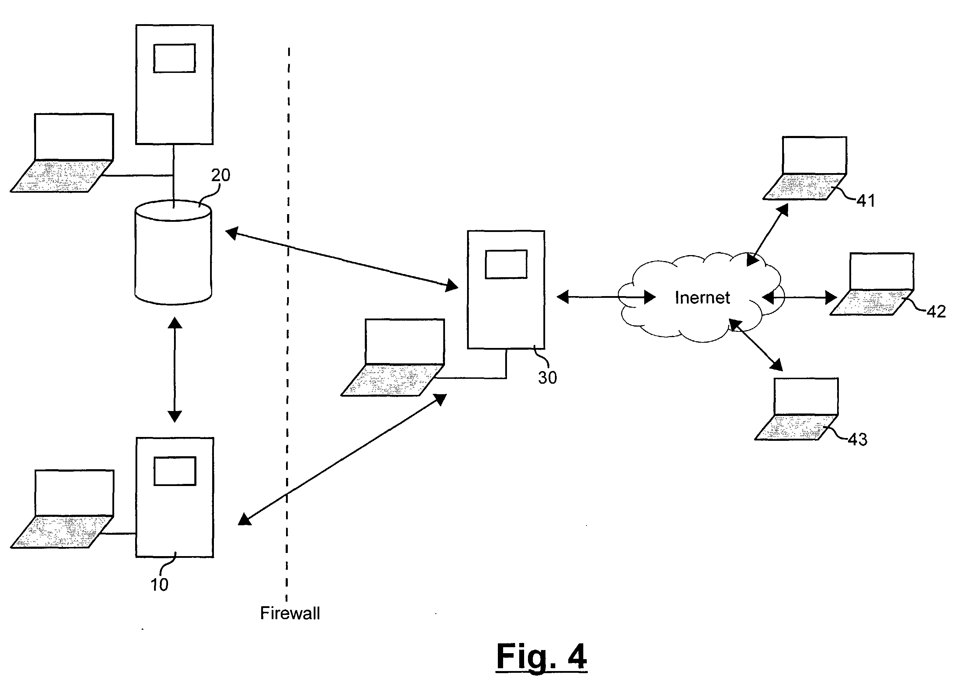

Figur 4 zeigt eine bevorzugte Hardwarekonfiguration zur Ausführung der Erfindung. Bezugszeichen 10 bezeichnet den Projekt-Designer, einen Server-Computer mit entsprechenden Einrichtungen zur Erstellung einer Publishing-Vorlage. Die Verfahrensschritte zur Erstellung der Publishing-Vorlage werden später unter Bezugnahme auf Figur 1 erläutert. Der Projekt-Designer kann gegebenenfalls auf eine Medien-Datenbank 20 zugreifen. Dabei handelt es sich vorzugsweise um eine SQL- oder ODBC-fähige Datenbank, z.B. der Hersteller Oracle, Sybase oder anderer. Bei der Medien-Datenbank handelt es sich um eine Verallgemeinerung einer bekannten Bild-Datenbank, wobei die Möglichkeit der Verwaltung von Texten, Bildern, Bewegtbildern und anderer Multimedia-Datentypen besteht. Die in die Medien-Datenbank 20 aufgenommenen Inhalte sind vorzugsweise in einer beliebig sinn-assoziativen hierarchischen Gruppierung (Thesauri) gegliedert. Ein Beispiel für die Gliederung ist etwa:

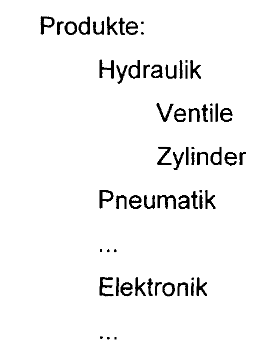

Zusätzlich gibt es die Möglichkeit, zu den eigentlichen Inhalten (Texten und Bildern) auch Stichworte mitzuführen. Diese als Verschlagwortung bekannten Mechanismen dienen der Strukturierung und schnellen Recherche der Inhalte. Die Medien-Datenbank 20 kann zusätzliche Funktionalitäten bieten, wie etwa die Möglichkeit, Inhalte aus Speicherplatzgründen automatisch auf externe Medien wie DLT-Roboter, CD- oder DVD-Archive zu archivieren und aus der Speicherplatte der Datenbank zu löschen und umgekehrt bei Bedarf diese Inhalte wieder auf die Platte rückzuarchivieren. Vorzugsweise enthält die Medien-Datenbank auch die Möglichkeit, gespeicherte Inhalte in ein anderes Datenformat zu konvertieren.

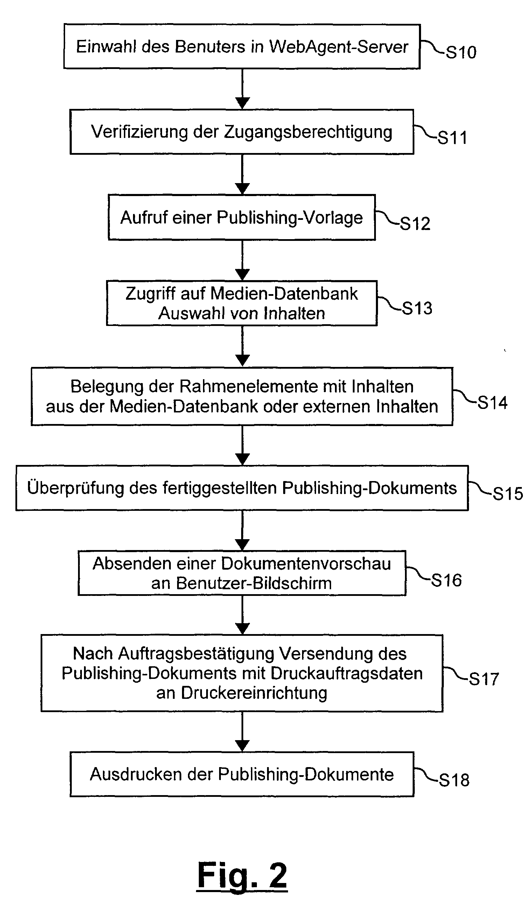

Bezugszeichen 30 in Figur 4 bezeichnet einen Web-Agent genannten Server-Computer, der über eine Firewall Zugriff sowohl zum im Projekt-Designer 10 abgespeicherten Daten als auch auf die Medien-Datenbank 20 hat. Außerdem können Benutzer oder Besteller 41, 42, 43 über das Internet oder jedes andere geeignete Datenübertragungsmedium auf den Web-Agent 30 zugreifen. Der Web-Agent 30 erstellt auf Anfrage und entsprechend der getroffenen Auswahl des Bestellers oder Benutzers aus der Publishing-Vorlage das Publishing-Dokument, wie später unter Bezugnahme auf Figur 2 erläutert wird.

Bei den in Figur 4 gezeigten Computersystemen oder Servern kann es sich um jeden beliebigen Typ von Computer handeln. Die Erfindung ist nicht auf eine bestimmte Hardwarekonfiguration oder ein bestimmtes Betriebssystem beschränkt.

Figur 1 zeigt schematisch die wesentlichen Verfahrensschritte zur Erstellung einer erfindungsgemäßen Publishing-Vorlage durch den Projekt-Designer 10. In einem ersten Schritt S1 wird eine Dokumentenvorlage entsprechend bestimmten Vorgaben wie Corporate Design, Logo, bestimmte Farbgebung usw. erstellt oder eine bereits erstellte Dokumentenvorlage aufgerufen. In diese Dokumentenvorlage werden dann im folgenden Schritt S2 Rahmenelemente oder Freiflächen eingefügt, die später mit wählbaren Inhalten belegt werden können. Bei den Rahmenelementen kann es sich um obligatorische Rahmenelemente handeln, die später bei der Erstellung des Publishing-Dokuments mit Inhalt gefüllt werden müssen oder auch um fakultative Rahmenelemente handeln, deren Belegung mit Inhalten dem Benutzer freigestellt ist. Die Rahmenelemente können entweder positionsfest oder (innerhalb bestimmter Grenzen) positionsvariabel sein.

Im darauffolgenden Verfahrensschritt S3 werden der Publishing-Vorlage noch weitere (unsichtbare) Zusatzinformationen beigefügt, die Daten über autorisierte Benutzer, die die Dokument-Vorlage verwenden dürfen, eine Projektbezeichnung, Dateiname und -pfad der Dokumenten-Vorlage usw. enthält. Vorzugsweise beinhaltet die Publishing-Vorlage alle Informationen, die zur späteren Anfertigung des Publishing-Dokuments und Auslieferung eines Shop-Produktes erforderlich ist.

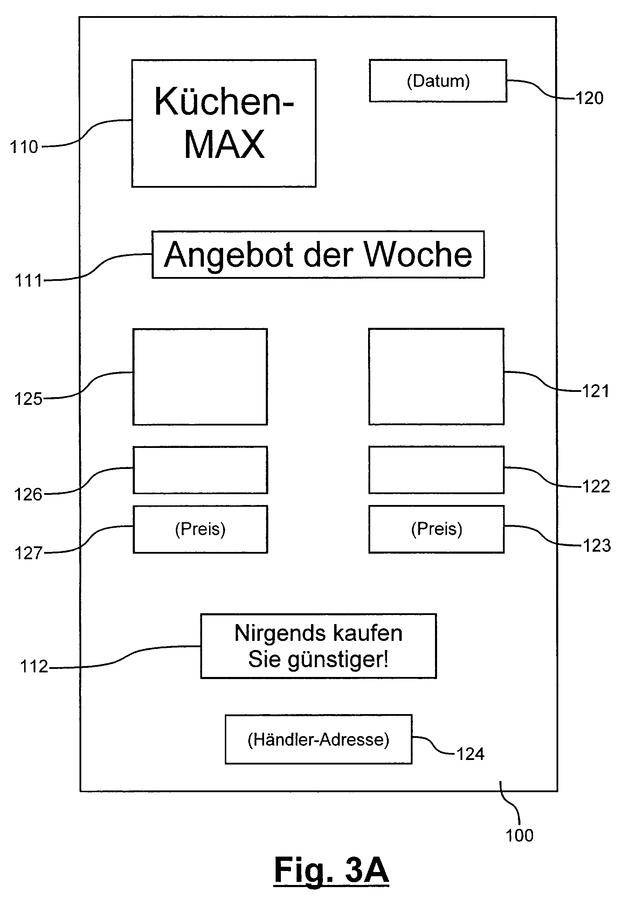

Figur 3A zeigt schematisch ein Beispiel einer derartigen erfindungsgemäßen Publishing-Vorlage, die insgesamt mit Bezugszeichen 100 bezeichnet ist. Inhaltsfeste Bestandteile wie das Firmenlogo 110, eine Überschrift 111 und eines Slogans 112 sind schon Teil der Dokumenten-Vorlage und können später bei der Erstellung des Publishing-Dokuments nicht mehr geändert werden.

Die in Figur 3A dargestellte Publishing-Vorlage enthält jedoch auch eine Anzahl von Rahmenelementen 120 bis 127, die durch einen späteren Benutzer mit Inhalten belegt werden können. Dabei sind jedem Rahmenelement jedoch Daten zugeordnet, die die Auswahl der möglichen Inhalte inhaltlich und insbesondere formal einschränken. Beispielsweise kann in das Datenelement 120 nur ein gültiges Datum einer bestimmten Schriftart und -größe eingefügt werden. Vorzugsweise ist eine bestimmte Zeitspanne vorgegeben.

Die Rahmenelemente 121 und 125 enthalten beispielsweise Daten, die eine Belegung durch eine Abbildung aus einer bestimmten Produktkategorie vorschreiben. Dies ist beispielsweise eine bestimmte Kategorie innerhalb der oben beschriebenen hierarchischen Gliederung der Medien-Datenbank. Die Rahmenelemente 122 und 126 bieten Raum für eine Produktbeschreibung, deren Formatierung wiederum festgelegt ist. Auch diese Produktbeschreibungen könne aus einer bestimmten Kategorie der Medien-Datenbank ausgewählt werden. Die Rahmenelemente 123 und 127 geben einen Preis an, der beispielsweise aus einer bestimmten Preisspanne ausgewählt werden kann. Das Rahmenelement 124 ist bei diesem Ausführungsbeispiel für die Adresse des werbenden Händlers gedacht.

Der Projektdesigner 10 kann außerdem folgende Funktionen übernehmen:
- Verwaltung der Benutzer und deren Berechtigung,
- Verwaltung der Medien-Datenbank,
- Verwaltung, Protokollierung und Abrechnung von Publishing-Bestellungen.

Figur 2 zeigt die wesentlichen Verfahrensschritte eines Ausführungsbeispiels des erfindungsgemäßen Verfahrens zur Erstellung eines Publishing-Dokuments.

Im ersten Verfahrensschritt S10 wählt sich der Benutzer oder Besteller von einem Endgerät, etwa einem Computer, einem internetfähigen Handy oder dergleichen beim Web-Agent 30 ein. Im darauffolgenden Verfahrensschritt S11 wird die Zugangsberechtigung des Benutzers überprüft und bei bestätigendem Resultat kann der Benutzer in Schritt S12 eine Publishing-Vorlage 100 aufrufen. Zur Belegung der in der Publishing-Vorlage enthaltenen Rahmenelemente wird dem Benutzer über den Web-Agent 30 Zugriff zur Medien-Datenbank 20 gewährt, wobei die Auswahl der einzusetzenden Inhalte wie oben beschrieben von den Vorgaben des jeweiligen Rahmenelements abhängt. Der Benutzer kann so die Rahmenelemente mit Inhalt auffüllen, wobei obligatorische Rahmenelemente belegt werden müssen und fakultative Rahmenelemente nicht. Bei positionsvariablen Rahmenelementen kann deren Position noch vom Benutzer innerhalb bestimmter Bereiche festgelegt werden. Neben Inhalten aus der Medien-Datenbank 20 kann der Benutzer auch externe Inhalte durch ein geeignetes Eingabemedium, etwa eine Tastatur oder Spracheingabe, einfügen. Die Inhalte werden dann entsprechend den Vorgaben des jeweiligen Rahmenelements formatiert.

Der Web-Agent 30 erstellt aufgrund der getroffenen Auswahl des Benutzers dann automatisch das Publishing-Dokument, wobei aus der Medien-Datenbank 20 entnommene und externe Inhalte automatisch in das richtige Format konvertiert werden. In Schritt S15 wird dann das gesamte Publishing-Dokument auf korrekte Formatierung usw. überprüft. Daraufhin können dessen einzelne Seiten auf Anfrage des Benutzers an diesen übermittelt werden, etwa als JPEG-Datei zur Bildschirmanzeige (Verfahrensschritt S16). Nachdem der Web-Agent 30 das Publishing-Dokument oder eine Mehrzahl von Publishing-Dokumenten fertiggestellt und überprüft hat und der Benutzer die Menge zu erstellender Werbemittel auf Basis des Publishing-Dokuments eingegeben und in Auftrag gegeben hat, wird in Verfahrensschritt S17 das fertiggestellte Publishing-Dokument (bzw. die Mehrzahl von Publishing-Dokumenten) vom Web-Agent 30 an den Projektdesigner 10 übergeben und durch diesen an eine geeignete Ausgabestelle, beispielsweise im Falle eines Print-Mediums an eine Druckeinrichtung weitergeleitet, die dann im abschließenden Verfahrensschritt S18 die gewünschte Auflage des Druckmediums erstellt.

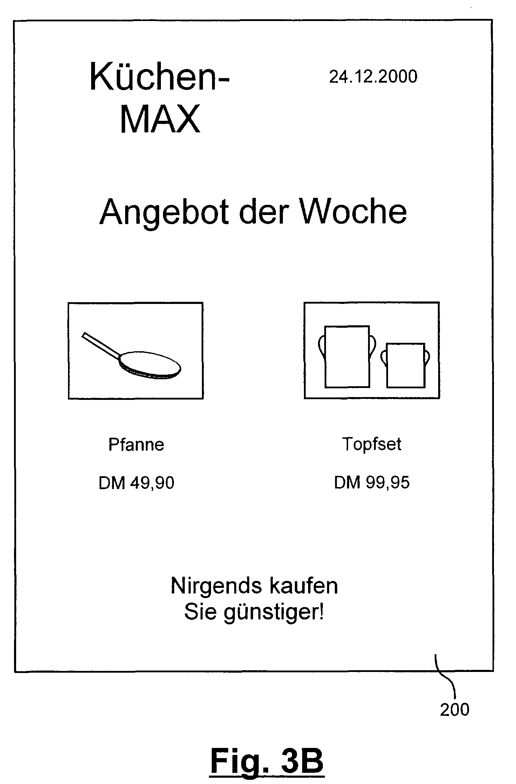

Figur 3B zeigt ein Beispiel eines Publishing-Dokuments 200, das aus der in Figur 3A dargestellten Publishing-Vorlage 100 erstellt wurde. Die Rahmenelemete sind mit entsprechenden Inhalten nach den Wünschen des jeweiligen Auftraggebers gefüllt und gleichzeitig werden die Vorgaben des Mutterunternehmens, hier beispielsweise die hypotetische Küchenwarenkette "Küchen-MAX" eingehalten.

Durch die Erfindung wird es einem Unternehmen, beispielsweise einer Handelsfirma oder deren Dienstleistern wie Werbeagenturen, Retrofirmen, Druckereien etc. möglich, qualitativ hochwertig gestaltete, den Vorgaben des Corporate Design entsprechende Dokumenten- oder Werbe-Vorlagen mit Freiflächen bzw. Rahmenelementen für Texte und Bilder zur Komplementierung über das Internet zur Verfügung zu stellen.

Der Anwender, beispielsweise der Verkaufsleiter oder Marketing-Leiter der regionalen Handels-Niederlassung kann diese leeren Freiflächen bzw. Rahmenelemente mit ausgewählten und zulässigen Bildern bzw. Texten aus der Produkt-Medien-Datenbank oder frei eingebbaren Texten (etwa Preise) über das Internet belegen und so das gewünschte Werbemittel kontrolliert vervollständigen.

Nach Begutachtung einer Dokumentenvorschau erstellt und kontrolliert das erfindungsgemäße System automatisch das Dokument mit den gewählten Texten und Bildern einschließlich der Übermittlung des Dokuments an eine Ausgabeeinrichtung wie etwa einen Drucker. Die Erfindung ermöglicht so die automatische, zeit- und kostensparende sowie flexible Erstellung von Dokumenten, vorzugsweise Werbemitteln.

## Patentansprüche

1. Verfahren zur automatischen Erstellung eines Publishing-Dokuments (200) über das Internet, aufweisend die Schritte:
- Erstellen einer Publishing-Vorlage (100) aufweisend eine Dokumentenvorlage mit festgelegtem Inhalt und ein oder mehrere Rahmenelemente (120-127), die mit Inhalten definierten Typs belegbar sind,
- Bereitstellung eines Zugangs über das Internet für berechtigte Benutzer zur Bearbeitung der Publishing-Vorlage (100) und zum Zugriff auf den Inhalt einer Medien-Datenbank (20),
- Belegung der Rahmenelemente mit Inhalten des definierten Typs entsprechend einer Benutzerauswahl aus Inhalten der Medien-Datenbank und/oder externen Inhalten.

2. Verfahren nach Anspruch 1, wobei ein Rahmenelement/Datentyp, Formatierung und/oder Zugehörigkeit zu einer bestimmten Inhaltskategorie oder einem Parameterwertebereich des Inhalts bestimmt.

3. Verfahren nach Anspruch 2, wobei die Medien-Datenbank (20) hierarchisch in verschiedene inhaltliche Kategorien gegliedert ist und ein bestimmtes Rahmenelement mit Inhalten aus einer bestimmten inhaltlichen Kategorie aus der Medien-Datenbank (20) belegbar ist.

4. Verfahren nach Anspruch 3, wobei einem berechtigten Benutzer zur Belegung des bestimmten Rahmenelements Zugang nur zu Inhalten in der zugewiesenen inhaltlichen Kategorie der Medien-Datenbank (20) ermöglicht wird.

5. Verfahren nach einem der Ansprüche 1 bis 4, wobei das Ausgabemedium ein Print-Medium ist und das fertiggestellte Publishing-Dokument (200) über das Internet zu einer Druckeinrichtung zum Ausdruck übermittelt wird.

6. Verfahren nach einem der Ansprüche 1 bis 4, wobei das Ausgabemedium ein Bildschirm ist und die Seiten des fertiggestellten Publishing-Dokumentes (200) dem Benutzer als JPEG-Datei zugesandt werden.

7. Verfahren nach einem der Ansprüche 1 bis 4, wobei das fertiggestellte Publishing-Dokument einer Ausgabeeinrichtung als E-Mail-Anhang zugesandt wird.

8. Verfahren nach einem der Ansprüche 1 bis 7, wobei das fertiggestellte Publishing-Dokument PDF- oder XML-Format aufweist.

9. Verfahren nach einem der Ansprüche 1 bis 8, wobei die Medien-Datenbank (20) eine SQL- bzw. ODBC-fähige Datenbank ist.

10. Verfahren nach einem der Ansprüche 1 bis 9, wobei die Publishing-Vorlage (100) Informationen zur Verifizierung eines berechtigten Benutzers enthält.

11. Verfahren nach einem der Ansprüche 1 bis 10, wobei die Publishing-Vorlage Dateinamen und -pfade der Dokumenten-Vorlage, eine Projektbezeichnung und/oder Kosteninformation des Publishing-Dokuments enthält.

12. Verfahren nach einem der Ansprüche 1 bis 11, wobei die Publishing-Vorlage obligatorische Rahmenelemente enthält, die zur Erstellung eines gültigen Publishing-Dokuments mit Inhalt belegt werden müssen.

13. Verfahren nach einem der Ansprüche 1 bis 12, wobei die Publishing-Vorlage positionsfeste Rahmenelemente enthält.

14. Verfahren nach einem der Ansprüche 1 bis 13, wobei die Publishing-Vorlage positionsvariable Rahmenelemente enthält.

15. Verfahren nach einem der Ansprüche 1 bis 14, wobei die aus der Medien-Datenbank zur Erstellung des Publishing-Dokuments kopierten Daten automatisch in das durch das Rahmenelement definierte Datenformat konvertiert werden.

16. Verfahren nach einem der Ansprüche 1 bis 15, wobei die Medien-Datenbank (20) Bilddaten, Textdaten, Tondaten, und/oder Bewegtbilddaten verschiedenster Formate enthält.

17. Verfahren nach einem der Ansprüche 1 bis 16, wobei in Abhängigkeit von Ausgabemedium und Stückzahl die Gesamtkosten der Erstellung eines Publishing-Dokuments ermittelt und dem Benutzer zugänglich gemacht werden.

18. Computerprogramm aufweisend Programmcode zur Ausführung der Verfahrensschritte nach einem der Ansprüche 1 bis 17.

19. Auf einem Speichermedium gespeicherte Publishing-Vorlage (100) aufweisend:
- eine Dokumentenvorlage(n) mit festgelegtem Inhalt,
- eines oder mehrere Rahmenelemente (120-127), die mit Inhalten definierten Formats belegbar sind,
- Daten, die die Verifizierung der Zugangsberechtigung eines Benutzers ermöglichen, und
- Daten, die die Auswahl von Inhalten aus einer Medien-Datenbank (20) zur Belegung eines Rahmenelements bestimmen.

20. Publishing-Vorlage nach Anspruch 19, ferner aufweisend Daten, die eine Projektbezeichnung sowie Dateiname und -pfad der Dokumentenvorlage bezeichnen.

21. Datensignal, das die Daten einer Publishing-Vorlage (100) in codierter Form enthält, welche aufweist:
- eine Dokumentenvorlage(n) mit festgelegtem Inhalt,
- eines oder mehrere Rahmenelemente (120-127), die mit Inhalten definierten Formats belegbar sind,
- Daten, die die Verifizierung der Zugangsberechtigung eines Benutzers ermöglichen, und
- Daten, die die Auswahl von Inhalten aus einer Medien-Datenbank (20) zur Belegung eines Rahmenelements bestimmen.

22. Computersystem zur automatischen Erstellung eines Publishing-Dokuments über das Internet, aufweisend:
- eine Einrichtung (10) zur Erstellung einer Publishing-Vorlage (100), die eine oder mehrere Dokumentenvorlagen mit festgelegtem Inhalt und ein oder mehrere Rahmenelemente (120-127), die mit Inhalten definierten Typs belegbar sind, enthält,
- eine Medien-Datenbank zur Speicherung von Medien-Inhalten,
- eine Einrichtung (10) zur Verifizierung der Zugangsberechtigung eines Benutzers,
- eine Internet-Schnittstelle, die einem berechtigten Benutzer Zugang zur Bearbeitung der Publishing-Vorlage und Zugriff auf die Medien-Datenbank ermöglicht,
- eine Einrichtung (30) zur Erzeugung des Publishing-Dokuments (200) durch Belegung der Rahmenelemente mit Inhalten des definierten Typs entsprechend einer Benutzerauswahl,
- eine Ausgabeeinrichtung (10) zur Ausgabe des fertiggestellten Publishing-Dokuments (200).

23. Computersystem nach Anspruch 22, wobei die Medien-Datenbank (20) hierarchisch in verschiedene inhaltliche Kategorien gegliedert ist und wobei die Publishing-Dokumenten-Erzeugungseinrichtung ein bestimmtes Rahmenelement mit Inhalten nur aus einer bestimmten zugehörigen Kategorie aus der Medien-Datenbank belegt.

24. Computersystem nach Anspruch 22 oder 23, wobei die Ausgabeeinrichtung (10) das fertiggestellte Publishing-Dokument (200) über das Internet an eine Druckeinrichtung zum Ausdrucken, an eine Bildschirmeinrichtung zur Bildschirmanzeige und/oder an ein Computersystem zur Weiterverarbeitung übermittelt.

25. Computersystem nach einem der Ansprüche 22 bis 24, wobei die Einrichtung zur Verifizierung einer Benutzerzugangsberechtigung Benutzerzugangsinformationen aus der Publishing-Vorlage ausliest.

26. Computersystem nach einem der Ansprüche 22 bis 25, wobei ein Rahmenelement die Formatierung der zugehörigen Inhalte definiert, ferner aufweisend eine Konvertierungseinrichtung zur Konvertierung von aus der Medien-Datenbank entnommenen Daten in das durch das Rahmenelement definierte Format.
